# FASCICULE DE BREVET EUROPEEN

(11) **EP 3 384 200 B1**
(45) Date de publication et mention de la délivrance du brevet: **11.09.2019**
(21) Numéro de dépôt: 16806062.2
(22) Date de dépôt: 02.12.2016
(51) Int. Cl.: F17C 13/00, C01B 3/00, F17C 11/00

(54) **RÉSERVOIR DE STOCKAGE D'HYDROGÈNE RÉALISÉ DANS UN MATÉRIAU ISOLANT THERMIQUEMENT FORMANT DES ENVELOPPES CYLINDRIQUES CONTENANT DES HYDRURES ET PROCÉDÉ DE FONCTIONNEMENT DE CE RÉSERVOIR**
AUS EINEM WÄRMEISOLIERENDEN MATERIAL, DAS ZYLINDRISCHE GEHÄUSE MIT HYDRIDEN BILDET, HERGESTELLTER WASSERSTOFFSPEICHER UND VERFAHREN ZUR BENUTZUNG DES WASSERSTOFFSPEICHERS
HYDROGEN STORAGE TANK PRODUCED FROM A THERMALLY INSULATING MATERIAL FORMING CYLINDRICAL CASINGS CONTAINING HYDRIDES AND METHOD OF USING THE SAME

(30) Priorité: 04.12.2015 FR 1561883
(43) Date de publication de la demande: 10.10.2018
(73) Titulaire: Commissariat à l'Énergie Atomique et aux Énergies Alternatives, 75015 Paris (FR)
(72) Inventeur: GILLIA, Olivier, 38360 Sassenage (FR); CHAISE, Albin, 38000 Grenoble (FR); PONTHIEU, Marine, 38600 Fontaine (FR)
(74) Mandataire: Nony
(86) Numéro de dépôt international: PCT/EP2016/079651
(87) Numéro de publication internationale: WO 2017/093522

(56) Documents cités:
- EP-A1- 1 338 554
- JP-A- 2001 295 997
- US-A- 4 566 281
- US-A- 4 964 524
- US-A1- 2012 222 972
- US-A1- 2015 064 585

## Description

### Domaine technique

La présente invention concerne un réservoir de stockage réversible d'hydrogène H₂ comprenant une pluralité d'enveloppes cylindriques contenant des hydrures, et un procédé de fonctionnement d'une tel réservoir.

La présente invention vise à réaliser un bain de fluide caloporteur thermostaté au sein du réservoir, de manière simple, efficace, peu cher et en minimisant le volume de fluide à chauffer ou à refroidir.

Les applications possibles de l'invention sont nombreuses et peuvent concerner l'ensemble du champ d'applications du stockage de l'hydrogène.

Il peut s'agir de réservoirs de stockage d'H₂ dédiés aux moyens de transport, tels que bateaux, sous-marins, voitures, autobus, camions, engins de chantier, véhicules à deux roues, ainsi que ceux du domaine des alimentations transportables en énergie, telles que les batteries pour appareils électroniques portables (téléphone portable, ordinateur portables,...).

Il peut s'agir également de réservoirs de stockage d'H₂ en plus grosse quantité et stationnaires tels que groupes électrogènes, stockage de l'H₂ produit par des énergies intermittentes (éoliennes, panneaux photovoltaïques, géothermie,...).

De manière générale, le réservoir selon l'invention peut être utilisé à des fins uniquement de transport de l'hydrogène, mais également pour un stockage embarqué d'hydrogène pour pile à combustible ou moteur thermique ou encore un stockage stationnaire d'hydrogène.

### Etat de la technique

On cherche des énergies alternatives aux pétroles du fait, notamment, de la réduction des réserves de pétrole. Un des vecteurs prometteurs pour ces sources d'énergie est l'hydrogène, qui peut être utilisé dans les piles à combustible pour produire de l'électricité.

L'hydrogène est un élément très répandu dans l'univers et sur la Terre, il peut être produit à partir du charbon, du gaz naturel ou d'autres hydrocarbures, mais aussi par simple électrolyse de l'eau en utilisant par exemple l'électricité produite par l'énergie solaire ou éolienne.

Les piles à combustibles fonctionnant avec de l'hydrogène sont déjà utilisées dans certaines applications, par exemple dans des véhicules automobiles mais sont encore peu répandues, notamment du fait des précautions à prendre et des difficultés pour le stockage de l'hydrogène.

Afin de diminuer le volume de stockage, l'hydrogène peut être stocké sous forme d'hydrogène gazeux comprimé entre 350 et 700 bars, mais cette densification de l'énergie peut encore être améliorée en intégrant des hydrures dans l'enceinte de pression.

Pour être plus dense encore, l'hydrogène peut aussi être stocké sous forme liquide, cependant ce stockage n'assure qu'un faible rendement de stockage et ne permet pas le stockage sur de longue durée. Le passage d'un volume d'hydrogène de l'état liquide à l'état gazeux dans les conditions normales de pression et de température produit un accroissement de son volume d'un facteur d'environ 800. Les réservoirs d'hydrogène sous forme liquide ne sont en général pas très résistants aux chocs mécaniques, cela pose d'importants problèmes de sécurité.

Il existe également le stockage d'hydrogène sous forme solide au moyen d'hydrures. Ce stockage autorise une densité volumique de stockage importante tout en minimisant l'impact énergétique du stockage sur le rendement global de la chaîne hydrogène, i.e. de sa production à sa conversion en une autre énergie.

Le principe du stockage solide de l'hydrogène sous forme d'hydrures est le suivant: certains matériaux et en particulier certains métaux possèdent la capacité d'absorber l'hydrogène pour former un hydrure, cette réaction est appelée absorption. Les hydrures formés peuvent à nouveau donner de l'hydrogène gazeux et un métal. Cette réaction est appelée désorption. L'absorption ou la désorption interviennent en fonction de la pression partielle d'hydrogène et la température.

On utilise par exemple une poudre métallique que l'on met en contact avec de l'hydrogène, un phénomène d'absorption apparaît et un hydrure métallique se forme. La libération de l'hydrogène s'effectue selon un mécanisme de désorption.

On peut aussi utiliser des hydrures complexes tels que les tétrahydroborates M(BH₄), les tétrahydroaluminates ou alanates M(AlH₄) pour le stockage et de la libération d'hydrogène.

Quelle que soit la forme des hydrures choisie, le stockage de l'hydrogène est une réaction exothermique, i.e. qui dégage de la chaleur, alors que la libération de l'hydrogène est une réaction endothermique, i.e. qui absorbe de la chaleur.

On cherche notamment à avoir un chargement rapide de la poudre métallique en hydrogène. Pour obtenir un tel chargement rapide, il faut évacuer la chaleur produite lors de ce chargement pour éviter de freiner l'absorption de l'hydrogène sur la poudre ou la matrice métallique. Lors du déchargement en hydrogène, de la chaleur est apportée. Par conséquent, l'efficacité du refroidissement et du réchauffement conditionne les débits de chargement et de déchargement.

Autrement dit, il est nécessaire d'évacuer de la chaleur lors de l'absorption et d'apporter de la chaleur lors de la désorption afin de faciliter les réactions et augmenter l'efficacité de l'hydrure en termes de débit d'hydrogène entrant ou sortant du réservoir de stockage. Ainsi, un réservoir d'hydrogène sous forme d'hydrures comprend généralement une enceinte contenant les hydrures et intègre en son sein un échangeur de chaleur.

Certains réservoirs d'hydrogène connus ont été conçus en logeant une pluralité d'enveloppes contenant chacune des hydrures au sein d'une enceinte extérieure à l'intérieur de laquelle on fait circuler un liquide caloporteur afin d'immerger les enveloppes au sein d'un bain le plus thermostaté possible, c'est-à-dire à la température contrôlée le plus précisément possible, le bain étant à une température relativement chaude pour le déchargement en hydrogène et à une température relativement froide pour le chargement en hydrogène.

On peut citer la demande de brevet JP05302699A qui divulgue un réservoir de stockage réversible d'hydrogène comprenant une pluralité d'enveloppes cylindriques contenant de la poudre métallique et logées dans une enceinte extérieure en étant agencées parallèles les unes aux autres, les enveloppes étant maintenues par le collecteur/évacuateur d'hydrogène, une pièce de distribution fluidique étant en outre agencée à l'intérieur de l'enceinte afin de distribuer uniformément le liquide caloporteur entre les enveloppes.

La demande de brevet JP61244997A divulgue également un réservoir de ce type avec une pluralité d'enveloppes contenant des hydrures et logées dans une enceinte extérieure, les enveloppes étant de forme triangulaire équilatérale, maintenues par un support en forme de peigne traversant l'enceinte, et agencées en rangées uniformes telles que deux enveloppes adjacentes sont orientées tête-bêche.

Le laboratoire « Helmholtz-Zentrum Geesthacht » a proposé un prototype de réservoir de stockage réversible d'hydrogène comprenant une pluralité d'enveloppes cylindriques contenant des alanates de sodium baignant dans un bain d'huile thermostaté à la fois pour l'absorption et la désorption de l'hydrogène : voir publication [1].

La société LABTECH INT, ltd a également proposé un prototype de réservoir similaire avec des cylindres contenant du lanthane de nickel LaNi5: voir référence [2].

Les réservoirs connus au sein desquels un bain thermostaté de liquide caloporteur est réalisé présentent certains inconvénients importants.

Tout d'abord, les échanges thermiques entre enveloppes contenant les hydrures et le liquide caloporteur ne sont pas nécessairement optimisés.

Ensuite, la chaleur sensible qui est requise pour le refroidissement ou le chauffage du liquide caloporteur pour réaliser le bain thermostaté respectivement lors du déchargement ou du chargement de l'hydrogène, est importante du fait du volume important de liquide caloporteur à faire circuler.

Enfin, le nombre de pièces nécessaires à la réalisation de ces réservoirs est important, notamment car il est nécessaire d'avoir une enceinte extérieure en tant que telle pour délimiter le bain et pour faire l'isolation thermique vis-à-vis de l'extérieur, d'avoir un support mécanique distinct pour le maintien des enveloppes et le cas échéant une pièce de distribution fluidique au sein de l'enceinte pour répartir le liquide caloporteur à faire circuler entre enveloppes. La réalisation des réservoirs connus à bain thermostaté peut ainsi être compliquée.

Le Document EP 1 338 554 décrit un réservoir destiné au stockage réversible d'hydrogène.

Il existe donc un besoin d'améliorer encore les réservoirs de stockage réversible de l'hydrogène, du type comprenant une pluralité d'enveloppes contenant des hydrures à immerger dans un bain de liquide caloporteur thermostaté, notamment en vue d'améliorer les échanges thermiques entre le liquide caloporteur et l'hydrogène, de faciliter la réalisation du réservoir et du bain thermostaté et d'en diminuer le coût.

Le but de l'invention est de répondre au moins partiellement à ce besoin.

### Exposé de l'invention

Pour ce faire, l'invention a pour objet un réservoir, destiné au stockage réversible d'hydrogène, comprenant :
- plusieurs enveloppes de forme cylindrique contenant chacune des hydrures et adaptées chacune pour être remplie ou vidée par de l'hydrogène H2 respectivement à absorber ou à désorber par les hydrures,
- une pièce massive en matériau isolant thermiquement et à faible capacité calorifique percée, en son sein, de plusieurs logements de forme cylindrique, dont le diamètre de chacun est supérieur à celui d'une enveloppe,
réservoir dans lequel chaque enveloppe est logée individuellement dans un logement en laissant dégagé un volume annulaire entre eux de sorte que ce dernier puisse être parcouru par un fluide caloporteur, selon un circuit dans chaque volume annulaire défini depuis une entrée commune à tous les volumes annulaires jusqu'à une sortie également commune.

Ainsi, l'invention consiste à créer un réservoir dans lequel on fait baigner des enveloppes cylindriques contenant des hydrures dans un bain de fluide caloporteur mais dont le volume est très faible puisque défini par les espaces entre chaque enveloppe et son logement au sein de la pièce massive, dont le diamètre est légèrement voire très légèrement supérieur. Grâce à cela, on peut faire circuler un film d'eau de faible voire de très faible épaisseur circuler autour de chaque enveloppe.

Comparativement aux réservoirs de stockage réversible de l'hydrogène à bain thermostaté selon l'état de l'art, et du fait, que les logements des enveloppes cylindriques sont réalisés dans une pièce massive en matériau isolant thermiquement et à faible capacité calorifique, on minimise grandement la chaleur sensible nécessaire au refroidissement ou au chauffage de l'eau de thermostatation lors du processus de déchargement ou de chargement de l'hydrogène, en minimisant la quantité d'eau mise en oeuvre.

Il va de soi que le matériau de la pièce massive doit être imperméable ou rendu imperméable sur les surfaces en contact avec le liquide afin qu'il ne s'imbibe pas d'eau.

Ainsi, comparativement aux réservoirs à bain thermostaté selon l'état de l'art, l'invention permet d'obtenir les améliorations suivantes :
- le volume entre les enveloppes cylindriques est occupé par un matériau à faible capacité calorifique, ce qui permet d'améliorer la dynamique du réservoir en diminuant l'inertie thermique du fluide caloporteur,
- l'apport/l'évacuation de chaleur par le fluide caloporteur se fait au plus proche de chaque enveloppe dans laquelle se passe la réaction exothermique/endothermique lors du chargement/déchargement de l'hydrogène. L'efficacité des échanges thermiques dans un réservoir selon l'invention est donc améliorée par rapport à un réservoir à bain thermostaté selon l'état de l'art dans lequel l'apport/l'évacuation de chaleur se fait dans un grand volume qui comprend le volume entre les enveloppes,
- l'utilisation d'un matériau isolant pour réaliser la structure qui supporte les enveloppes cylindriques permet de réunir en une seule pièce massive à la fois les fonctions de maintien en place des cylindres, de circuits du fluide caloporteur et d'isolation thermique.

Le fluide caloporteur parcourant le réservoir selon l'invention peut être avantageusement une huile, un sel fondu de l'eau glycolée.

Avantageusement, chaque logement cylindrique est agencé concentriquement autour d'une enveloppe cylindrique.

Selon une variante avantageuse, les enveloppes et les logements sont de forme cylindrique circulaire droite.

Selon une première variante de réalisation la pièce massive est une pièce monobloc, de préférence obtenue par moulage.

Selon une autre variante de réalisation, la pièce massive est un assemblage de blocs empilés les uns sur les autres et maintenus en position, chaque bloc étant percé d'une portion des canaux cylindriques.

Selon une autre variante de réalisation, la pièce massive monobloc ou constituée par les blocs empilés les uns sur les autres peut comprendre en outre des évidements distincts des logements, afin de réduire la quantité de matière entre chaque logement cylindrique.

De préférence, le matériau de la pièce massive a une capacité calorifique volumique inférieure ou égale à la moitié de la capacité calorifique volumique du fluide caloporteur.

De préférence également, le matériau de la pièce massive peut être un polymère, choisi par exemple parmi le polypropylène expansé (PPE), le polystyrène expansé (PSE), polyuréthane expansé, mousse acrylique, éthylène acétate de vinyle (EVA), mousse polyéthylène, mousse néoprène. Un avantage d'avoir une pièce massive en PPE est que le réservoir selon l'invention est renforcé mécaniquement et peut donc résister à des chocs, en cas de séisme par exemple.

Les enveloppes cylindriques peuvent être borgnes.

La largeur du volume annulaire peut être comprise entre 1% et 50% du diamètre de l'enveloppe cylindrique.

Selon un mode de réalisation avantageux, la pièce massive comprend au moins une portion d'extrémité formant un collecteur ou un distributeur de fluide caloporteur, comprenant des portions borgnes des logements dans lesquelles les extrémités des enveloppes sont logées, la portion d'extrémité comprenant en outre au moins un canal principal et des canaux secondaires respectivement de récupération ou d'alimentation du liquide caloporteur depuis l'extérieur, les canaux secondaires étant reliés au canal principal et aux portion borgnes des logements afin de répartir le fluide caloporteur dans les volumes annulaires (V).

Ainsi, on peut intégrer un collecteur et/ou un distributeur de fluide caloporteur directement dans la pièce massive. Il va de soi que l'on peut réaliser la distribution ou la collecte du fluide caloporteur avec d'autres moyens, notamment afin de faciliter le nettoyage du circuit de fluide caloporteur.

La capacité calorifique de la pièce massive est avantageusement inférieure à celle du liquide caloporteur parcourant le réservoir divisée par un facteur 10. De préférence, la capacité calorifique Cp de la pièce massive est inférieure à 400J/kg/K, de préférence encore inférieure à 40J/kg/K.

De même, la conductivité thermique de la pièce massive est avantageusement inférieure à celle du liquide caloporteur parcourant le réservoir divisée par un facteur 10. De préférence, la conductivité thermique de la pièce massive est inférieure à 2 W/m/K.

Le matériau constituant la pièce massive est choisi avantageusement parmi les polymères, par exemple un polyamide, polypropylène, polyuréthane, polystyrène, et leur mise en forme sous forme de mousse expansée.

Selon une variante avantageuse, le réservoir peut comprendre des pièces formant répartiteurs de débit, agencées chacune dans un canal secondaire de sorte à avoir des débits sensiblement égaux dans les volumes annulaires.

Selon un mode de réalisation avantageux, les extrémités borgnes des enveloppes sont en butée contre les portions de logements borgnes d'une portion d'extrémité de la pièce massive. Suivant l'application et le calcul de résistance mécanique du réservoir, si la pièce massive n'est pas suffisamment résistante pour supporter les enveloppes cylindriques, on peut aussi envisager de les faire supporter par des pièces de structure en matériau plus résistant, agencées à l'extérieur du réservoir.

Avantageusement, les logements sont réalisés avec leurs axes parallèles et sont équirépartis dans le volume de la pièce massive.

Le réservoir selon l'invention peut comprendre une enceinte, apte à être mise sous pression, de préférence au moyen du fluide caloporteur, au sein de laquelle les enveloppes et la pièce massive sont logées.

L'invention a également pour objet un procédé de fonctionnement d'un réservoir qui vient d'être décrit, comprenant
a/ pour l'absorption d'hydrogène :
   - une étape d'injection et de mise en circulation d'un fluide caloporteur à une température relativement froide dans les volumes annulaires de sorte à créer un bain thermostaté à une température relativement froide;
   - une étape d'injection de l'hydrogène dans les enveloppes cylindriques contenant les hydrures, la circulation du fluide caloporteur étant maintenue;
b/ pour la désorption d'hydrogène :
   - une étape d'injection et de mise en circulation d'un fluide caloporteur à une température relativement chaude dans les volumes annulaires de sorte à créer un bain thermostaté à une température relativement chaude ;
   - une étape de collecte de l'hydrogène depuis les enveloppes cylindriques contenant les hydrures, la circulation du fluide caloporteur étant maintenue.

Lors de l'étape a/, l'injection d'hydrogène peut avoir lieu dès le début du refroidissement ou une fois le bain froid thermostaté obtenu.

Lors de l'étape b/, la collecte de l'hydrogène peut être réalisée avant le chauffage de l'ensemble, ou une fois le bain chaud thermostaté obtenu.

Le fluide caloporteur est de préférence un liquide, de préférence de l'eau, ou de l'eau avec du glycol ou autre.

### Description détaillée

D'autres avantages et caractéristiques de l'invention ressortiront mieux à la lecture de la description détaillée d'exemples de mise en oeuvre de l'invention faite à titre illustratif et non limitatif en référence aux figures suivantes parmi lesquelles :
- la figure 1 est une vue schématique en perspective d'un exemple de réservoir de stockage réversible de l'hydrogène selon l'invention;
- la figure 2 est une vue schématique en perspective d'un autre exemple de réservoir de stockage réversible de l'hydrogène selon l'invention;
- la figure 2A est une vue en coupe longitudinale du réservoir selon la figure 2;
- la figure 3 est une vue schématique en perspective de la pièce massive formant le fourreau des enveloppes contenant des hydrures du réservoir selon la figure 2;
- la figure 4 est une vue en éclaté montrant les différents blocs constitutifs de la pièce massive montrée en figure 3;
- la figure 4A est une vue en perspective de dessus montrant un bloc d'extrémité de la pièce massive montrée en figure 3, qui constitue un distributeur ou un collecteur de fluide caloporteur;
- la figure 5 est une vue en perspective et par transparence d'un réservoir selon la figure 2 équipé en outre d'un bloc-collecteur et d'un bloc-distributeur à chacune de ses extrémités ;
- la figure 6 est une vue en coupe longitudinale du réservoir selon la figure 2 et selon une variante de réalisation du support des enveloppes cylindriques;
- les figures 7 et 7A sont des vues schématique respectivement en perspective et en coupe longitudinale d'un exemple de pièce massive monobloc utilisée dans un réservoir selon l'invention;
- les figures 8 et 8A sont des vues schématique respectivement en perspective et en coupe longitudinale d'une variante de réalisation d'une pièce massive du réservoir selon l'invention selon laquelle des pièces de calage des enveloppes sont intercalées au sein de l'empilement de blocs constitutifs de la pièce massive;
- la figure 9 est une vue schématique de dessus d'une pièce de calage agencée dans un réservoir illustré selon les figures 8 et 8A ;
- la figure 10 est une vue schématique en coupe transversale montrant une variante d'une pièce massive monobloc conforme à l'invention ;
- la figure 11 est une vue schématique de détail en coupe transversale réalisée au fond du réservoir selon une variante avec pièces de calage de supportage axial des enveloppes d'hydrures.

Dans l'ensemble de la présente demande, les termes « vertical », « inférieur », « supérieur », « bas », « haut », « dessous », « dessus », « hauteur » sont à comprendre par référence par rapport à un réservoir de stockage réversible de l'hydrogène selon l'invention tel qu'il est en configuration verticale de fonctionnement.

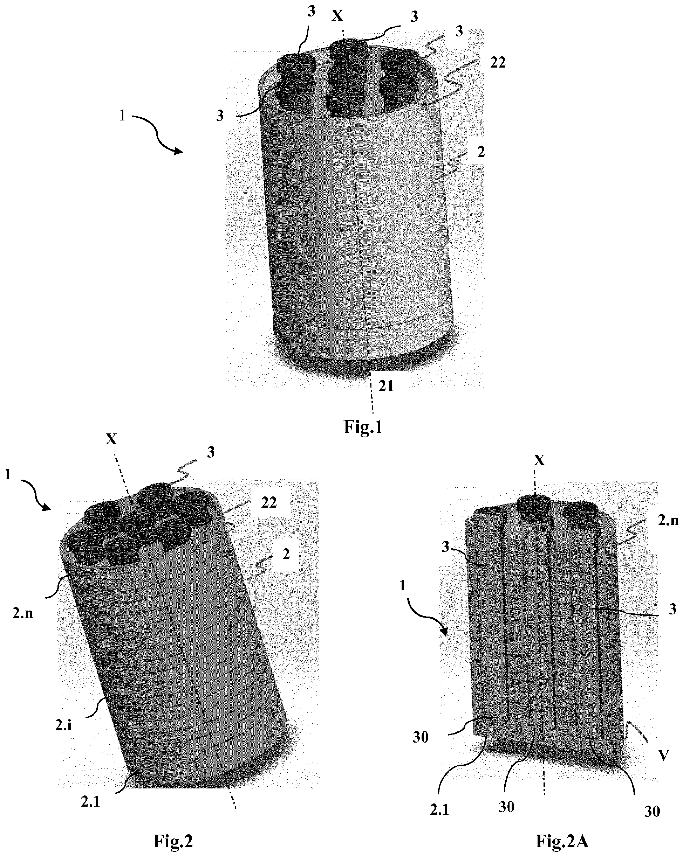

On a représenté en figure 1 un réservoir 1 de stockage réversible d'hydrogène H₂ selon l'invention.

Le réservoir 1 comprend tout d'abord une pièce massive 2 en matériau isolant et à faible capacité calorifique dans laquelle est logée et maintenue une pluralité d'enveloppes identiques, de forme cylindrique à section circulaire droite 3, et contenant chacune des hydrures métalliques.

Plus précisément, la pièce massive 2 comprend une pluralité de logements cylindriques identiques 20 dont leurs axes sont agencés parallèle à l'axe X longitudinal du réservoir 1 et qui sont équi-répartis dans le volume de la pièce massive 2.

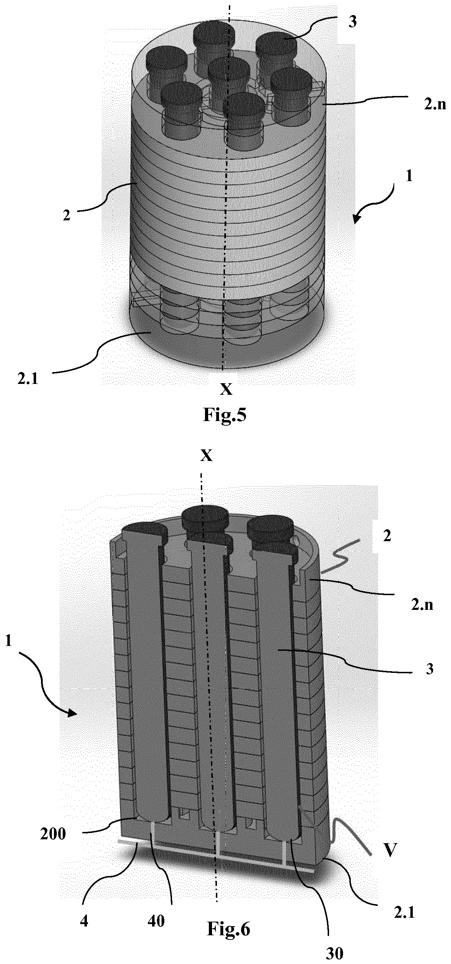

Selon l'invention, à l'intérieur de chaque logement 20 est logée et maintenue une seule enveloppe cylindrique 3 en laissant dégagé un volume annulaire V entre eux de sorte que ce dernier puisse être parcouru par un fluide caloporteur (figures 2A et 6). Par exemple, la largeur d'un volume annulaire peut être égale à 5 mm pour un diamètre de l'enveloppe cylindrique de 76mm.

Dans les exemples illustrés, le réservoir 1 comprend un nombre de sept enveloppes cylindriques identiques 3 logées chacune dans un logement 20 en étant parallèles à l'axe X et en étant équi-répartis dans le volume de la pièce massive 2.

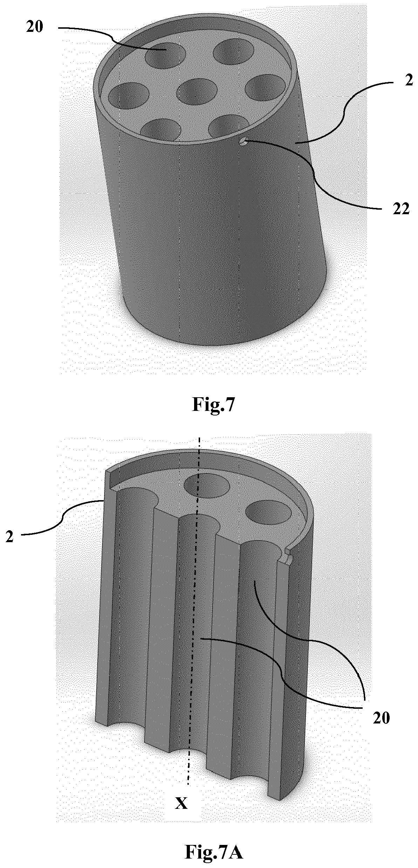

La pièce massive 2 peut avantageusement être en PPE. Cette pièce massive 2 peut être réalisée monobloc, par exemple par moulage (figures 1, 7, 7A) ou par un assemblage d'un nombre de n blocs 2.1, ...2.i, ...2.n empilés les uns sur les autres et maintenus en position (figures 2 à 6). La réalisation de la pièce massive 2 par assemblage de plusieurs blocs distincts est avantageuse car facilement réalisable par taillage de blocs puis empilage.

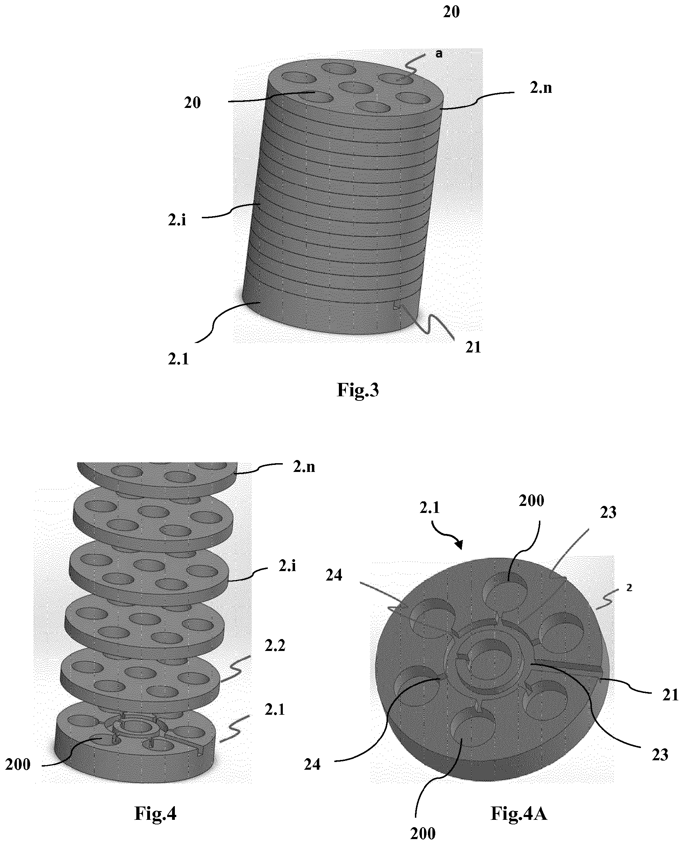

Il est ensuite possible de réaliser une étanchéité à l'eau par collage étanche des blocs entre eux (figures 3 et 4), mais il est aussi possible de considérer que l'étanchéité ne sera pas suffisante et de placer le tout dans un bac étanche afin de récolter les fuites.

Quelle que soit la réalisation prévue pour la pièce massive 2 (monobloc ou assemblage de blocs empilés et maintenus en position), on réalise un circuit de fluide caloporteur dans chaque volume annulaire défini depuis une entrée 21 commune à tous les volumes annulaires V jusqu'à une sortie 22 également commune.

Le réservoir 1 en fonctionnement peut être agencé à la verticale, c'est-à-dire avec les enveloppes cylindriques 3 à la verticale. Les deux sens de circulation du fluide caloporteur sont possibles, c'est-à-dire de haut en bas ou de bas en haut comme illustré sur les figures. Il peut être préférable lors du chauffage, c'est-à-dire lors d'une désorption d'hydrogène à effectuer, d'injecter le fluide caloporteur chaud en haut, et au refroidissement, c'est-à-dire lors d'une absorption d'hydrogène à effectuer, le fluide caloporteur froid en bas pour laisser la stratification thermique naturelle se faire.

Au lieu d'injecter un fluide caloporteur chaud, on peut aussi prévoir de chauffer ce fluide directement dans chacun des volumes annulaires autour des enveloppes 3, soit par exemple par une résistance enroulée autour de chaque enveloppe, soit par une résistance située dans la partie du réservoir située en dessous des enveloppes 3.

Dans le mode de construction où la pièce massive 2 est réalisé par assemblage de blocs, une réalisation avantageuse est de graver un circuit de distribution/de collecte du fluide caloporteur dans un bloc d'extrémité 2.1 ou 2.n afin de constituer un distributeur/collecteur intégré. Le bloc gravé peut être par exemple le bloc inférieur 2.1 (figures 4 et 4A).

Dans cette réalisation, le collecteur ou distributeur de fluide caloporteur 2.1, comprend des portions borgnes 200 des logements 20 destinées à recevoir les extrémités 30 borgnes des enveloppes 3. Ce collecteur ou distributeur 2.1 comprend en outre un canal principal 23 et des canaux secondaires 24 respectivement de récupération ou d'alimentation du liquide caloporteur depuis l'extérieur. Les canaux secondaires 24 sont reliés au canal principal 23 et aux portions borgnes 200 des logements 20 afin de répartir le fluide caloporteur dans les volumes annulaires V depuis l'entrée 21 (figures 4 et 4A) ou vers la sortie 22.

Les règles de l'art de la distribution de fluide conduisent à avoir une section de passage dans le canal 23 plus importante que la section de passage de chaque canal secondaire 24. Afin d'avoir des débits sensiblement égaux dans les volumes annulaires V, on peut envisager d'agencer dans chaque canal secondaire 24 une pièce formant répartiteurs de débit.

On peut envisager de faire à la fois le distributeur 2.1 et le collecteur 2.n de fluide caloporteur en les gravant de manière identique ou non. En figure 5, on voit par transparence, le réservoir 1 avec à l'une de ses extrémités un bloc 2.1 gravé en tant que distributeur et à l'autre de ses extrémités un bloc 2.n gravé en tant que collecteur du fluide caloporteur.

D'autres formes de circuit de distribution/de collecte sont possibles.

Si le dimensionnement du bloc 2.1 inférieur n'est pas suffisant, notamment s'il ne peut soutenir à lui seul le poids des enveloppes 3 avec les hydrures et l'hydrogène stocké, on peut envisager un supportage des enveloppes depuis l'extérieur, par exemple au moyen d'un support 4 en forme de peigne dont chaque branche 40 vient soutenir une enveloppe 3.

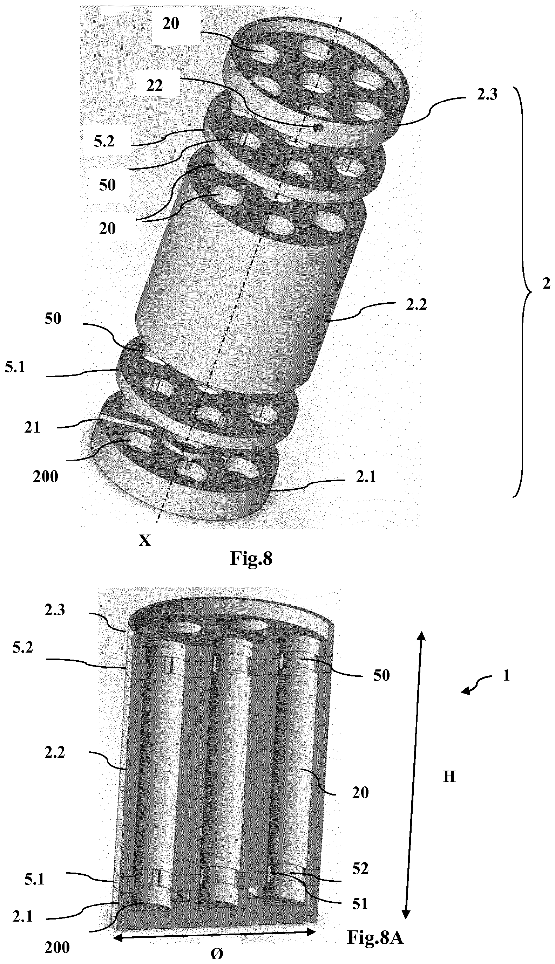

On a représenté en figures 8 et 8A une variante de réalisation de la pièce massive selon laquelle on intercale une ou plusieurs pièces de calage 5, 5.1, 5.2 au sein de l'empilement des blocs 2.1, ...2.i, ...2.n.

La ou les pièces de calage 5, 5.1, 5.2 ont pour fonction de maintenir latéralement le cylindre des enveloppes 3 et donc de permettre leur parfait centrage par rapport à leur logement respectif 20, ce qui définit un volume annulaire parfaitement centré autour de chaque enveloppe 3.

Plus précisément, tel qu'illustré sur ces figures 8 et 8A, la pièce massive est un assemblage d'un empilement comportant successivement de bas en haut, un bloc collecteur ou distributeur de fluide caloporteur 2.1, une première pièce de calage 5.1, un bloc central 2.2 définissant la majeure partie de la hauteur des logements 20, une deuxième pièce de calage 5.2, et un bloc distributeur ou collecteur de fluide 2.3.

On peut aussi intercaler des pièces 5, 5.1 et 5.2 dans le type de fabrication de la figure 6 à différents niveaux entre les plaques 2.n, c'est-à-dire à des hauteurs intermédiaires pour maintenir axialement les enveloppes 3 cylindriques.

Les blocs collecteurs/distributeurs 2.1, 2.3 peuvent être réalisés avantageusement comme décrit en référence aux figures 2 à 6.

A titre d'exemple illustratif, la pièce massive 2 illustrée en figures 8 et 8A peut présenter une hauteur de l'ordre de 500 mm pour un diamètre de l'ordre de 300 mm.

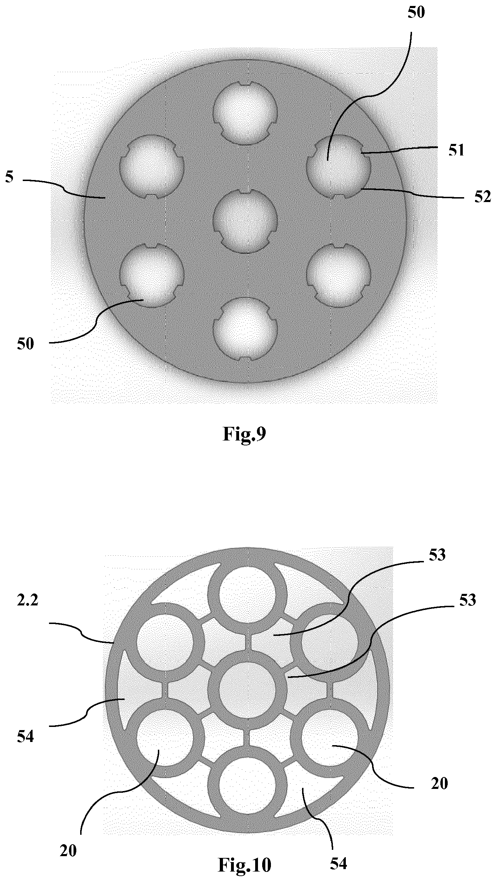

Comme illustré en figure 9, une pièce de calage comporte autant d'ouvertures débouchantes 50 qu'il y a de nombre de logements. Chaque ouverture débouchante 50 est délimitée par une bordure avec une ou plusieurs protubérances 51 par rapport à leur diamètre principal 52.

Dans l'exemple illustré, il est prévu trois protubérances 51 équi-réparties et qui définissent entre elles un diamètre sensiblement égal au diamètre externe d'une enveloppe 3. Ainsi, les protubérances 51 maintiennent latéralement chaque enveloppe 3 qui est logée dans un logement 20 et dans une ouverture 50 en regard. L'espace annulaire défini entre chaque enveloppe 3 et le diamètre principal 52 permet la circulation du fluide caloporteur.

Bien que la réalisation des protubérances de calage 51 soit montrée uniquement sur la hauteur des pièces de calage 4.1, 4.2, on peut tout aussi prévoir qu'elles soient réalisées sur toute la hauteur de la pièce massive lorsque cette dernière est monobloc.

En figure 10, on a représenté une variante d'une pièce massive monobloc 2 qui comprend en plus des logements 20 des évidements plus ou moins gros 53, 54 sur au moins une partie de la hauteur de la pièce 2. Ces évidements 53, 54 distincts des logements 20 permettent de réduire la quantité de matière entre chaque logement cylindrique 20, et donc peuvent alléger la masse de la pièce 2.

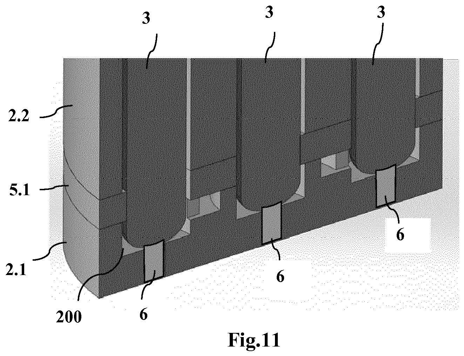

En figure 11, on a représenté une variante de supportage axial et calage axial des enveloppes 3 au fond du réservoir 1. Des cales 6 insérés dans le bloc du fond 2.1 permettent individuellement d'ajuster la hauteur de chaque enveloppe 3 dans son logement 20.

Pour le calage angulaire, on peut mettre en oeuvre conjointement ou en lieu et place des protubérances de calage 51, un couvercle en matériau isolant venant coiffer toutes les enveloppes d'hydrures 3, et qui comporte des trous dans lesquels s'insèrent les extrémités supérieurs des enveloppes 3.

On décrit maintenant le fonctionnement du réservoir 1 selon l'invention, avec en tant que fluide caloporteur de l'eau.

Chacune des enveloppes cylindriques 3 logée dans un logement 20 de la pièce massive 2 avec un volume annulaire entre eux est remplie au moyen d'un matériau hydrure mais initialement vide d'hydrogène.

On injecte de l'eau froide depuis l'entrée 21 jusqu'à la sortie 22 à un débit calculé par des règles d'échange thermique entre une enveloppe 3 et l'eau. Le débit d'eau est réparti de manière uniforme dans chaque volume annulaire autour d'une enveloppe 3. Il se forme un bain thermostaté, le niveau du bain étant géré par le bon dimensionnement de l'ouverture de sortie 22 qui doit être capable de faire passer le débit maximum imposé en entrée 21.

On injecte alors de l'hydrogène dans les enveloppes 3, le matériau hydrure absorbe l'hydrogène, de la chaleur est ainsi produite. L'augmentation de température à l'intérieur des enveloppes 3 devrait progressivement bloquer la réaction d'absorption de l'hydrogène dans le matériau hydrure. Afin d'éviter cela, la chaleur est évacuée par conduction à l'intérieur des enveloppes 3 puis par échange avec l'eau dans les volumes annulaires V. Le chargement de l'hydrogène peut alors continuer de manière normale. La cinétique de remplissage est conditionnée par la capacité à refroidir l'hydrogène. Pour une vitesse de remplissage en hydrogène plus importante, on peut par exemple augmenter le débit d'eau.

Inversement, afin d'utiliser l'hydrogène du réservoir, c'est-à-dire désorber l'hydrogène du réservoir 1, il faut chauffer les enveloppes 3. On injecte alors de l'eau chauffée par l'entrée 21, qui va circuler autour de chaque enveloppe 3 dans le volume annulaire V.

L'avantage du réservoir 1 selon l'invention qui vient d'être décrit par rapport à un réservoir à bain thermostaté dans lequel les enveloppes contenant les hydrures sont plongées dans un unique grand bain d'eau, est que l'on n'a pas à chauffer une masse d'eau inutilement. Cette masse est remplacée par le matériau à faible capacité calorifique de la pièce massive 2.

Cet avantage est d'autant plus important que souvent, dans les systèmes avec réservoirs selon l'état de l'art le circuit caloporteur est une boucle fermée, et la montée en température du système inclut l'énergie nécessaire à la montée en température du liquide caloporteur lui-même. La minimisation de cette quantité d'énergie grâce à l'invention est donc importante.

L'invention n'est pas limitée aux exemples qui viennent d'être décrits ; on peut notamment combiner entre elles des caractéristiques des exemples illustrés au sein de variantes non illustrées.

D'autres variantes et améliorations peuvent être prévues sans pour autant sortir du cadre de l'invention.

Dans les modes de réalisation illustrés où la pièce massive 2 est réalisée par empilement de blocs, un simple maintien en position de ces derniers est nécessaire. Cela peut concerner toutes les configurations où l'on choisit de contenir le liquide caloporteur par un bac extérieur.

Mais, on peut aussi prévoir de coller entre eux les blocs empilés les uns sur les autres. Dans un tel mode, les blocs empilés sont de préférence en polymère et on choisit le type de colle approprié en fonction des polymères retenus pour les blocs. Par exemple, les colles époxy, les colles de type polyuréthane et les colles cyanoacrylates conviennent aux collages des matériaux polymères.

Dans le mode d'un empilement de blocs non collés pour réaliser la pièce 2, qui est placé dans un conteneur contenant un liquide caloporteur, on peut tout-à-fait s'affranchir de bloc de distribution en tant que tel et, à la place réserver un es pace de distribution sous un bloc du type de celui illustré aux figures 7 et 7A.

Dans les modes de réalisation illustrés, le calage des enveloppes d'hydrures métalliques 3 est réalisé axialement par les cales 6 insérées dans le fond du réservoir 1 et angulairement par les protubérances de calage et/ou un couvercle isolant non représenté comportant des trous dans lesquels viennent s'insérer individuellement les enveloppes d'hydrures métalliques 3. Ces modes de calage conviennent parfaitement pour la plupart des enveloppes avec hydrures relativement légers. Pour des enveloppes avec hydrures dont le poids est élevé, ou avec un bloc isolant du fond moins résistant mécaniquement, on peut envisager de supporter les enveloppes 3, axialement en soutenant les enveloppes par des cales en matériau plus résistant et radialement par un couvercle, de manière plus générale une plaque percée ajustée sur l'extrémité supérieure des cylindres dont le matériau est plus résistant mécaniquement, par exemple un métal ou un polymère plus résistant.

Dans les modes illustrées, les enveloppes 3 d'hydrure métalliques sont borgnes, i.e. avec l'extrémité du fond bouchée les hydrures métalliques étant remplis par l'autre extrémité. On peut aussi envisager d'avoir des enveloppes avec ouvertes à chacune de leur extrémité, ces ouvertures définissant respectivement une entrée et une sortie distinctes dans le réservoir. Il faut alors envisager un système de fermeture de chaque côté des enveloppes. Un tel système de fermeture peut par exemple consister en un couvercle bombé fixé par soudage sur chaque extrémité ouverte d'enveloppe ou par un système démontable, tel qu'un système de bride ou de bouchon vissé.

### Références citées

[1] : O., Bellosta Von Colbe, J.M., Lozano, G.A., (...), Dornheim, M., Klassen, T« Testing of hydrogen storage tank based on 8 Kg NaAlH4 » 2010 AIChE Annual Meeting, Conférence Proceedings ;
[2] : http://www.labtech-hydrogen.com/common_files/brochure.pdf; http://www.labtech-hydrogen.com/index.php?page= EVINGEN.

## Revendications

1. Réservoir (1), destiné au stockage réversible d'hydrogène, comprenant :
- plusieurs enveloppes (3) de forme cylindrique contenant chacune des hydrures et adaptées chacune pour être remplie ou vidée par de l'hydrogène H₂ respectivement à absorber ou à désorber par les hydrures,
- une pièce massive (2) en matériau isolant thermiquement et à faible capacité calorifique percée, en son sein, de plusieurs logements (20) de forme cylindrique, dont le diamètre de chacun est supérieur à celui d'une enveloppe,
réservoir dans lequel chaque enveloppe est logée individuellement dans un logement en laissant dégagé un volume annulaire (V) entre eux de sorte que ce dernier puisse être parcouru par un fluide caloporteur, selon un circuit dans chaque volume annulaire défini depuis une entrée commune à tous les volumes annulaires jusqu'à une sortie également commune.

2. Réservoir selon la revendication 1, chaque logement cylindrique étant agencé concentriquement autour d'une enveloppe cylindrique.

3. Réservoir selon la revendication 1 ou 2, les enveloppes et les logements étant de forme cylindrique circulaire droite.

4. Réservoir selon l'une des revendications 1 à 3, la pièce massive étant une pièce monobloc, de préférence obtenue par moulage.

5. Réservoir selon l'une des revendications 1 à 3, la pièce massive étant un assemblage de blocs (2.1,...2.i,...2.n) empilés les uns sur les autres et maintenus en position, chaque bloc étant percé d'une portion des logements cylindriques.

6. Réservoir selon l'une des revendications précédentes, la pièce massive comprend en outre des évidements distincts des logements.

7. Réservoir selon l'une des revendications précédentes, le matériau de la pièce massive ayant une capacité calorifique volumique inférieure ou égale à la moitié de la capacité calorifique volumique du fluide caloporteur.

8. Réservoir selon l'une des revendications précédentes, le matériau de la pièce massive étant un polymère, choisi par exemple parmi le polypropylène expansé (PPE), le polystyrène expansé (PSE), polyuréthane expansé, mousse acrylique, éthylène acétate de vinyle (EVA), mousse polyéthylène, mousse néoprène.

9. Réservoir selon l'une des revendications précédentes, la largeur du volume annulaire est comprise entre 1% et 50% du diamètre de l'enveloppe cylindrique.

10. Réservoir selon l'une des revendications précédentes, les enveloppes cylindriques étant borgnes.

11. Réservoir selon l'une des revendications précédentes, la pièce massive comprenant au moins une portion d'extrémité (2.1, 2.n) formant un collecteur ou un distributeur de fluide caloporteur, comprenant des portions borgnes (200) des logements dans lesquelles les extrémités (30) des enveloppes sont logées, la portion d'extrémité comprenant en outre au moins un canal principal (23) et des canaux secondaires (24) respectivement de récupération ou d'alimentation du liquide caloporteur depuis l'extérieur, les canaux secondaires étant reliés au canal principal et aux portions borgnes des logements afin de répartir le fluide caloporteur dans les volumes annulaires (V), le réservoir, comprenant de préférence des pièces formant répartiteurs de débit, agencées chacune dans un canal secondaire (24) de sorte à avoir des débits sensiblement égaux dans les volumes annulaires.

12. Réservoir selon la revendication 10, les extrémités borgnes (30) des enveloppes étant en butée contre les portions de logement borgnes d'une portion d'extrémité de la pièce massive.

13. Réservoir selon l'une des revendications précédentes, les logements étant réalisés avec leurs axes parallèles et équirépartis dans le volume de la pièce massive.

14. Réservoir selon l'une des revendications précédentes, comprenant une enceinte, apte à être mise sous pression, de préférence au moyen du fluide caloporteur, au sein de laquelle les enveloppes et la pièce massive sont logées.

15. Procédé de fonctionnement d'un réservoir selon l'une des revendications précédentes, comprenant
a/ pour l'absorption d'hydrogène :
- une étape d'injection et de mise en circulation d'un fluide caloporteur à une température relativement froide dans les volumes annulaires (V) de sorte à créer un bain thermostaté à une température relativement froide;
- une étape d'injection de l'hydrogène dans les enveloppes cylindriques (3) contenant les hydrures, la circulation du fluide caloporteur étant maintenue;
b/ pour la désorption d'hydrogène :
- une étape d'injection et de mise en circulation d'un fluide caloporteur à une température relativement chaude dans les volumes annulaires (V) de sorte à créer un bain thermostaté à une température relativement chaude ;
- une étape de collecte de l'hydrogène depuis les enveloppes cylindriques (3) contenant les hydrures, la circulation du fluide caloporteur étant maintenue,
le fluide caloporteur étant de préférence un liquide, de préférence de l'eau ou de l'eau avec du glycol.

## Patentansprüche

1. Behälter (1), welcher zur reversiblen Speicherung von Wasserstoff bestimmt ist und umfasst:
- mehrere Hüllen (3) von zylindrischer Form, die jeweils Hydride enthalten und jeweils dafür ausgelegt sind, mit Wasserstoff H₂, der von den Hydriden zu absorbieren bzw. zu desorbieren ist, gefüllt oder von diesem entleert zu werden,
- ein massives Teil (2) aus wärmeisolierendem Material und mit geringer Wärmekapazität, das in seinem Inneren von mehreren Aufnahmen (20) von zylindrischer Form durchbohrt ist, deren Durchmesser jeweils größer als derjenige einer Hülle ist,
wobei in dem Behälter jede Hülle einzeln in einer Aufnahme aufgenommen ist, wobei ein ringförmiges Volumen (V) dazwischen frei gelassen wird, so dass dieses Letztere von einem Wärmeträgermedium durchströmt werden kann, entlang eines Kreislaufs in jedem ringförmigen Volumen, der von einem Eingang, der allen ringförmigen Volumina gemeinsam ist, bis zu einem ebenfalls gemeinsamen Ausgang definiert ist.

2. Behälter nach Anspruch 1, wobei jede zylindrische Aufnahme konzentrisch um eine zylindrische Hülle herum angeordnet ist.

3. Behälter nach Anspruch 1 oder 2, wobei die Hüllen und die Aufnahmen von gerader kreiszylindrischer Form sind.

4. Behälter nach einem der Ansprüche 1 bis 3, wobei das massive Teil ein einstückiges Teil ist, das vorzugsweise durch Formen erhalten wird.

5. Behälter nach einem der Ansprüche 1 bis 3, wobei das massive Teil ein Verband von Blöcken (2.1, ..., 2.i, ..., 2.n) ist, die übereinandergestapelt sind und in ihrer Position gehalten werden, wobei jeder Block von einem Abschnitt der zylindrischen Aufnahmen durchbohrt ist.

6. Behälter nach einem der vorhergehenden Ansprüche, wobei das massive Teil außerdem Aussparungen umfasst, die von den Aufnahmen verschieden sind.

7. Behälter nach einem der vorhergehenden Ansprüche, wobei das Material des massiven Teils eine volumenbezogene Wärmekapazität aufweist, die kleiner oder gleich der Hälfte der volumenbezogenen Wärmekapazität des Wärmeträgermediums ist.

8. Behälter nach einem der vorhergehenden Ansprüche, wobei das Material des massiven Teils ein Polymer ist, das zum Beispiel aus expandiertem Polypropylen (EPP), expandiertem Polystyrol (EPS), expandiertem Polyurethan, Acrylschaum, Vinylethylenacetat (VEA), Polyethylenschaum, Neoprenschaum ausgewählt ist.

9. Behälter nach einem der vorhergehenden Ansprüche, wobei die Breite des ringförmigen Volumens zwischen 1 % und 50 % des Durchmessers der zylindrischen Hülle beträgt.

10. Behälter nach einem der vorhergehenden Ansprüche, wobei die zylindrischen Hüllen einseitig geschlossen sind.

11. Behälter nach einem der vorhergehenden Ansprüche, wobei das massive Teil wenigstens einen Endabschnitt (2.1, 2.n), der einen Sammler oder einen Verteiler für das Wärmeträgermedium bildet, umfasst, der einseitig geschlossene Abschnitte (200) der Aufnahmen umfasst, in welchen die Enden (30) der Hüllen aufgenommen sind, wobei der Endabschnitt außerdem wenigstens einen Hauptkanal (23) und sekundäre Kanäle (24) zur Rückgewinnung bzw. Zuführung der Wärmeträgerflüssigkeit von außen umfasst, wobei die sekundären Kanäle mit dem Hauptkanal und mit den einseitig geschlossenen Abschnitten der Aufnahmen verbunden sind, um das Wärmeträgermedium in den ringförmigen Volumina (V) zu verteilen, wobei der Behälter vorzugsweise Durchflussverteiler bildende Teile umfasst, die jeweils in einem sekundären Kanal (24) angeordnet sind, damit in den ringförmigen Volumina im Wesentlichen gleiche Durchflussmengen vorliegen.

12. Behälter nach Anspruch 10, wobei die geschlossenen Enden (30) der Hüllen an den einseitig geschlossenen Aufnahmeabschnitten eines Endabschnitts des massiven Teils anliegen.

13. Behälter nach einem der vorhergehenden Ansprüche, wobei die Aufnahmen so hergestellt sind, dass ihre Achsen parallel und im Volumen des massiven Teils gleichmäßig verteilt sind.

14. Behälter nach einem der vorhergehenden Ansprüche, welcher ein Gehäuse umfasst, das, vorzugsweise mithilfe des Wärmeträgermediums, mit Druck beaufschlagt werden kann und in dessen Innerem die Hüllen und das massive Teil aufgenommen sind.

15. Verfahren zum Betrieb eines Behälters nach einem der vorhergehenden Ansprüche, welches umfasst:
a/ für die Absorption von Wasserstoff:
- einen Schritt der Einspritzung und des Bewirkens der Zirkulation eines Wärmeträgermediums mit einer relativ kalten Temperatur in den ringförmigen Volumina (V), um ein thermostatisiertes Bad mit einer relativ kalten Temperatur zu erzeugen;
- einen Schritt der Einspritzung des Wasserstoffs in die zylindrischen Hüllen (3), welche die Hydride enthalten, wobei die Zirkulation des Wärmeträgermediums aufrechterhalten wird;
b/ für die Desorption von Wasserstoff:
- einen Schritt der Einspritzung und des Bewirkens der Zirkulation eines Wärmeträgermediums mit einer relativ warmen Temperatur in den ringförmigen Volumina (V), um ein thermostatisiertes Bad mit einer relativ warmen Temperatur zu erzeugen;
- einen Schritt des Sammelns des Wasserstoffs aus den zylindrischen Hüllen (3), welche die Hydride enthalten, wobei die Zirkulation des Wärmeträgermediums aufrechterhalten wird,
wobei das Wärmeträgermedium vorzugsweise eine Flüssigkeit ist, vorzugsweise Wasser oder Wasser mit Glykol.

## Claims

1. Tank (1), intended for reversible storage of hydrogen, comprising:
- several casings (3) of cylindrical shape each containing hydrides and each suitable for being filled with or emptied of hydrogen H₂ to be absorbed or desorbed by the hydrides, respectively,
- a solid component (2) made of thermally insulating material with a low heat capacity with its interior perforated by several housings (20) of cylindrical shape, the diameter of each being greater than that of a casing,
in said tank, each casing is housed individually in a housing, leaving an annular space (V) free between them so that the latter may be traversed by a heat-transfer fluid, along a circuit in each annular space defined from an inlet common to all the annular spaces to an outlet, which is also common.

2. Tank according to Claim 1, each cylindrical housing being arranged concentrically around a cylindrical casing.

3. Tank according to Claim 1 or 2, the casings and the housings being of right circular cylindrical shape.

4. Tank according to one of Claims 1 to 3, the solid component being in one piece, preferably obtained by moulding.

5. Tank according to one of Claims 1 to 3, the solid component being an assembly of blocks (2.1,...2.i,...2.n) stacked on top of one another and held in position, each block being perforated by a portion of the cylindrical housings.

6. Tank according to one of the preceding claims, the solid component further comprising recesses separate from the housings.

7. Tank according to one of the preceding claims, the material of the solid component having a volumetric heat capacity less than or equal to half the volumetric heat capacity of the heat-transfer fluid.

8. Tank according to one of the preceding claims, the material of the solid component being a polymer, selected for example from expanded polypropylene (EPP), expanded polystyrene (EPS), expanded polyurethane, acrylic foam, ethylene vinyl acetate (EVA), polyethylene foam, neoprene foam.

9. Tank according to one of the preceding claims, the width of the annular space being between 1% and 50% of the diameter of the cylindrical casing.

10. Tank according to one of the preceding claims, the cylindrical casings being blind.

11. Tank according to one of the preceding claims, the solid component comprising at least one end portion (2.1, 2.n) forming a heat-transfer fluid collector or distributor, comprising blind portions (200) of the housings in which the ends (30) of the casings are housed, the end portion further comprising at least one main channel (23) and secondary channels (24) respectively for recovery or supply of the heat-transfer fluid from the exterior, the secondary channels being connected to the main channel and to the blind portions of the housings in order to distribute the heat-transfer fluid in the annular spaces (V), the tank preferably comprising components forming flow distributors, each arranged in a secondary channel (24) so as to have approximately equal flow rates in the annular spaces.

12. Tank according to Claim 10, the blind ends (30) of the casings abutting against the blind housing portions of an end portion of the solid component.

13. Tank according to one of the preceding claims, the housings being made with their axes parallel and uniformly distributed in the volume of the solid component.

14. Tank according to one of the preceding claims, comprising a vessel, suitable for being pressurized, preferably by means of the heat-transfer fluid, within which the casings and the solid component are housed.

15. Method of operation of a tank according to one of the preceding claims, comprising
a/ for absorption of hydrogen:
- a step of injecting and circulating a heat-transfer fluid at a relatively cold temperature in the annular spaces (V) so as to create a bath thermostatically controlled to a relatively cold temperature;
- a step of injecting hydrogen into the cylindrical casings (3) containing the hydrides, the circulation of the heat-transfer fluid being maintained;
b/ for desorption of hydrogen:
- a step of injecting and circulating a heat-transfer fluid at a relatively hot temperature in the annular spaces (V) so as to create a bath thermostatically controlled to a relatively hot temperature;
- a step of collecting the hydrogen from the cylindrical casings (3) containing the hydrides, the circulation of the heat-transfer fluid being maintained,
the heat-transfer fluid preferably being a liquid, preferably water or water with glycol.
